# EUROPEAN PATENT SPECIFICATION

(11) **EP 4 408 242 B1**
(45) Date of publication and mention of the grant of the patent: **19.03.2025**
(21) Application number: 22839800.4
(22) Date of filing: 19.12.2022
(51) Int. Cl.: A47J 31/36

(54) **BEVERAGE POD SYSTEM WITH POD CATCHER**
GETRÄNKEPODSYSTEM MIT PODFÄNGER
SYSTÈME DE CAPSULE DE BOISSON AVEC DISPOSITIF RÉCEPTEUR DE CAPSULES

(30) Priority: 21.12.2021 EP 21216616
(43) Date of publication of application: 07.08.2024
(73) Proprietor: Société des Produits Nestlé S.A., 1800 Vevey (CH)
(72) Inventor: VUAGNIAUX, Didier, 1188 Gimel (CH); KOLLEP, Alexandre, 1095 Lutry (CH); ZÜRCHER, Reto Markus, 9100 Herisau (CH); EISENBART, Alex, 9204 Andwil (CH)
(74) Representative: Pasquino, Fabio
(86) International application number: PCT/EP2022/086661
(87) International publication number: WO 2023/117906

(56) References cited:
- EP-A1- 3 262 994
- EP-A1- 3 501 348
- WO-A2-2020/114995
- US-A1- 2010 037 779
- US-A1- 2012 207 893

## Description

### Field of the invention

The present invention relates to the field of preparation of beverages with a system including a single-serve container comprising a beverage ingredient and a machine that has an extraction chamber in which the container can be inserted, extracted and from which it can be ejected.

### Background of the invention

Single serve containers for the automatic preparation of beverages encompass various formats of containers that can be relatively soft or flexible, such as pods, and made of any material, recyclable or non-recyclable, biodegradable or non-biodegradable, such as aluminium, plastic, filter paper.

One problem encountered with the systems extracting beverages from said pods is the handling of the pod in an extraction device, specifically the closing of the chamber around the pod to perform the extraction process and then the proper ejection of the pod from the chamber. The pod usually has to be positioned by the user in a housing, then the device is closed manually or automatically around the pod.

It is important to correctly position the pod so that the device closes properly around the latter and to form a good seal to ensure good conditions of extraction. Bad positioning may damage the pod, and thus affect the conditions of extraction. Finally, at the end of the beverage preparation, the pod shall be easily ejected without risk of false orientation and machine blocking.

EP 1859714 and WO 2013/026844 describe a system extracting beverages from soft or flexible pods presenting specific characteristics :
- the pods are made of aluminium or plastic materials,
- the pods present a symmetrical shape relatively to the plane comprising the flange of the pod,
- the pods always present the same shape, dimension and volume and the extraction chamber is designed for receiving this single type of pod shape.

WO 2020/089404 describes another system extracting beverages from soft or flexible pods presenting other characteristics :
- the pods present asymmetrical shape relatively to the plane comprising the flange of the pod,
- different pods presenting different shapes and volumes can be used and the extraction chamber is designed for receiving these different pods.

The extraction device is provided with an extraction chamber configured to adapt its size to the shape and volume of the pod introduced.

Due to the asymmetrical shape and the use of different sizes of pods, the extraction device of the above cited systems designed for single size of symmetrical pods cannot be used.

EP 3501348 describes a capsule delivery and rejection mechanism for a beverage extraction device comprising two jaws, provided with a clamp portion to receive a capsule flange when the capsule is introduced in the mechanism and to hold the capsule to push it inside a downstream cage, and is provided with a hook to pull the capsule flange out of the downstream cage.

Thus, the capsule is moved in and out of the cage with the jaws having the function to push and pull the flange during this movement, the fixed downstream part interacting with the face of the capsule opposed to the flange.

In addition, in order to respect environment, it is required today to use pods made of biodegradable and/or compostable materials, in particular made essentially of paper. These new materials lead to particular properties and consequently to specific problems during the beverage preparation and the handling of the pod in the extraction device.

In particular, production of pods presenting asymmetrical shapes can lead to inconsistent dimension of the pods, in particular the diameter of the flange of the pod can vary. For example, for a desired diameter of 54 mm, a difference of +/- 1 mm can occur at the production.

The extraction device of the above cited systems cannot be used with pods presenting such inconsistent dimensions because there is a risk that the flange of some pods is pinched by the pod catchers which would prevent the correct closure of the chamber or would lead to some pods are not being centered correctly inside the chamber and consequently would interact with the chamber in non-desired manner. Moreover, the asymmetrical shape of the pod increases this pinching risk due to the position of the flange along the downstream piercing arrangement compared to a pod presenting a symmetrical shape along the plane of the flange.

An object of the invention is to address at least the above existing problems.

### Summary of the invention

In a first aspect of the invention, there is provided a device for extracting a beverage ingredient by supplying an extraction liquid into a pod,
said pod comprising :
   - a pod body, said pod body comprising :
      - a side wall and a bottom wall defining a chamber, said chamber extending axially between the bottom and a top opening,
      - a circumferential annular flange projecting radially outward from the top opening, said flange comprising a top surface opposite to the chamber with respect to the opening,
         said pod body containing a beverage ingredient,
      and
   - a top lid attached to the top surface of the circumferential flange, said top lid closing the top opening of the pod body,
   and
said device comprising :
   - upstream and downstream pod enclosing parts relatively translatable along a longitudinal axis (XX') between an open position for inserting and/or ejecting the pod and a closed position for forming an extraction chamber enclosing the pod during extraction,
      - the upstream part defining a cage for enclosing the pod body and bearing an upstream piercing arrangement for opening the bottom wall of the pod body and a liquid injector, and
      - the downstream part defining a plate transverse to the longitudinal axis (XX'), said plate comprising :
         - a downstream plane piercing arrangement for opening the lid of the pod, and
         - a peripheral area,
         and
   - an insertion section for inserting the pod in the device, said insertion section being designed to position the pod with the lid facing the downstream piercing arrangement, and
   - a pod holder attached to said peripheral area of the downstream part, said pod holder being movable between :
      . a receiving position for receiving and holding the lid of the pod in front of the downstream plane piercing arrangement, and
      . a retracted position at the lateral sides of the downstream plane piercing arrangement, said pod holder comprising a pair of retaining and positioning elements, each of said elements comprising a lower holding surface and a transverse arc-shaped ridge, and
said pair of retaining and positioning elements being pushable from the receiving position to the retracted position by the upstream enclosing part when said upstream enclosing part is translated longitudinally from the open position to the closed position, and
wherein the retaining and positioning elements move from the receiving position to the retracted position along diverging directions.

The invention relates to a device for extracting a beverage ingredient typically comprised in a beverage preparation machine configured for receiving pods. For instance, the machine is a coffee, tea, chocolate or soup preparation machine, preferably a coffee machine. In particular, the machine is arranged for preparing within the extraction chamber a beverage by passing water, preferably hot, or another liquid through a pod containing an ingredient of the beverage to be prepared, such as roasted ground coffee or tea leaves or instant coffee or instant tea or chocolate or cacao or milk powder or dehydrated soup. In the preferred embodiment, the beverage ingredient is roasted and ground coffee.

The device is configured for extracting a beverage from a beverage ingredient contained in the pod by supplying an extraction liquid, such as water, in contact with the beverage ingredient contained in the pod.

The device comprises upstream and downstream pod enclosing parts relatively movable between an open position for inserting and/or ejecting such pod and a closed position for forming an extraction chamber enclosing the pod during beverage ingredient extraction.

Typically, the pod can be inserted into the device from above under the effect of gravity. Ejection or removal of the pod upon reopening of the enclosing parts may also be driven by gravity.

The upstream and downstream pod enclosing parts are relatively translatable along a longitudinal axis (XX') between an open position for inserting and/or ejecting the pod and a closed position for forming an extraction chamber enclosing the pod during extraction.

The upstream part defines an empty cage or cavity for enclosing the pod body and comprises an upstream piercing arrangement in the form of one or more piercers for piercing the bottom wall of the inserted pod and at least one liquid injector for supplying liquid through the pierced bottom wall of the pod.

This upstream piercing arrangement can comprise piercers in the form of blades. These blades can be designed and positioned to pierce the wall of the bottom of the pod body when the upstream and downstream pod enclosing parts are brought to the closed position. The liquid injector, such as a shower at the upstream part of the cage, can introduce the extracting liquid through the pre-pierced openings.

In an alternative, this upstream piercing arrangement can comprise at least one hollow needle configured to pierce the wall of the bottom of the pod body and said hollow needle(s) can comprise an internal axial channel for guiding the extracting liquid in the chamber of the pod body.

The downstream part defines a plate extending along a plane transverse to the longitudinal axis. Accordingly, this plate extends along a plane that is perpendicular to the longitudinal axis XX'. This plate of the downstream part comprises a downstream plane piercing arrangement for opening the lid of the pod when the extracting liquid is introduced inside the pod. Usually, this downstream plane piercing arrangement is designed for opening the lid by relative engagement with the lid under the effect of the rise in pressure of the injected liquid in the pod body chamber and inflation of the lid against the piercing arrangement. This downstream plane piercing arrangement may comprise a rigid plate comprising opening elements such as spikes, that can present the shape of cones or pyramids, optionally truncated at their ends, on its surface turned to the lid. In addition, the plate comprises traversing holes to evacuate the beverage dispensed from the opened lid to a tube or nozzle collecting and dispensing beverage to a drinking cup.

In addition, the plate of the downstream part comprises a peripheral area that extends around the whole periphery of the downstream plane piercing arrangement. Consequently, this peripheral area extends in the same plane as the downstream plane piercing arrangement.

The device comprises an insertion section for inserting the pod in the device. Generally, this section is positioned above the upstream and downstream pod enclosing parts so that the pod is inserted by gravity between these two parts. This insertion section is designed so that the user is urged to position the pod with its lid facing the downstream piercing arrangement. Preferably, this insertion section can comprise a recognition device to recognise or identify the pod that is introduced inside the extraction device. The recognition device can comprise :
- a pod temporary blocking means to block the pod in a temporary recognition position, and
- a device to recognise the pod blocked in this temporary recognition position.

The recognition device is configured to enable the pod temporary blocking means to let the pod fall to the pod holder of the extraction device once the pod has been recognised.

The device comprises a pod holder attached to the peripheral area of the downstream part. While being attached, that is to say supported by the peripheral area, the pod holder can be moved between two positions :
- a first receiving position for receiving and holding the lid of the pod in front of the downstream plane piercing arrangement, and
- a second retracted position at the lateral sides of the downstream plane piercing arrangement.

The pod holder comprises a pair of retaining and positioning elements. In the receiving position of the pod holder, these elements retain the pod vertically or slightly inclined versus vertical and position the pod in front of the downstream plane piercing arrangement.

Each of these pair of elements of the pod holder comprises a lower holding surface and a transverse arc-shaped ridge.

This pair of elements are configured so that in their receiving position :
- the lower holding surfaces of these elements retain the pod vertically as it falls by gravity inside the device from the insertion section in between the two enclosing parts. These lower holding surfaces are positioned so that the lid of the pod is aligned with the downstream piercing arrangement.
- the transverse arc-shaped ridges retain the pod longitudinally so that the lid of the pod remains essentially parallel or slightly inclined away from the downstream plane piercing arrangement. Preferably, these ridges extend in a transverse plane that is slightly inclined relative to the plane of the downstream plane piercing arrangement, the lower parts of the elements being closer to the downstream part than the upper parts. This inclination provides a larger upper space for the insertion of the pod from the insertion section down to the pod holder and limits the risk of wrong road for the pod. Due to the fact that the pod presents asymmetrical shape versus the plane of the lid, the pod cannot stand in a balanced position when its lid is vertically oriented, and even less for the biggest pods, since its centre of gravity lies in the middle of the pod body.

This inclination provides the additional advantage of limiting the movement of the pod inside the pair of elements when they are moved from the receiving to the retracted position since during said movement, the path of movement of the part of the pod laying on the lower holding surfaces is kept very short.

The transverse arc-shaped ridges can extend in a transverse plane that is inclined by few degrees relatively to the plane of the plane piercing arrangement.

Generally, the elements of the pair present symmetric shapes versus the vertical plane comprising the longitudinal axis XX' extending through the centre of the downstream piercing arrangement.

The pair of retaining and positioning elements are movable between two positions depending on the status of the operation of the extracting device :
- in the status of insertion of a new pod, the pair of retaining and positioning elements is in a receiving position for receiving and holding the pod. The pair of elements retain the pod in front of the downstream plane piercing arrangement. The pair of elements extend in front of the downstream part, in particular in front of the peripheral area of the downstream part. The pair of transverse arc-shaped ridges are preferably inclined relative to the plane of the downstream plane piercing arrangement.
- in the status of extraction of the pod (that is introduction of liquid in the pod), the pair of elements are in a retracted position at the lateral sides of the downstream plane piercing arrangement.

In addition, the pair of retaining and positioning elements are pushable from the receiving position to the retracted position by the upstream enclosing part when said upstream enclosing part is translated longitudinally from the open position to the closed position.

Consequently, depending on the operation step implemented in the extraction device, the pair of retaining and positioning elements are able either to interact with the pod by retaining it or to stop any interaction with the pod which can interact freely with the cage or can be ejected.

Generally, the pair of retaining and positioning elements can be retracted inside the peripheral area of the downstream plane piercing arrangement. Receiving areas can be provided in the peripheral area to enable the movement of the elements to the retracted position.

According to the invention, the retaining and positioning elements move from the receiving position to the retracted position along diverging directions.

By "diverging directions", it is meant that the directions followed by the first retaining and positioning element and the second retaining and positioning element are not parallel and that the distance between these elements is greater in the retracted position than in the receiving position.

Consequently, in the receiving position, the pair of retaining and positioning elements define an intermediate space that is sized to retain at least the smaller pods, that is the pods presenting the smallest diameters due to the inconsistent manufacturing. When these elements are pushed by the upstream enclosing part from this receiving position to the retracted position, the diverging directions cause the space between these elements to increase which guarantees :
- that the flanges of the pods presenting the biggest diameters do not remain pinched by these elements in the retracted position, and
- that the upstream enclosing part is able to lean on the downstream enclosing part for forming the extraction chamber in an homogeneous manner all along the periphery of the pod flange. A flange that would be partially pinched in one of the retaining and positioning elements during the movement the closure of the chamber would lead to inequal closure, liquid leaking, impossibility to get pressure increase and correct extraction of the pod.

The risk of pinching is particularly increased with pods presenting inconsistent diameter even if the tolerance is small.

The diverging directions of the elements during movement to the retracted position avoid the risk of pinching.

Generally, when the retaining and positioning elements move from the receiving position to the retracted position, these elements can diverge transversally by a dimension corresponding to the tolerance about the diameters of the manufactured pods. For example, for a tolerance of more or less 1 mm, each element can diverge transversally by at least 0.5 mm, preferably 1 mm during the movement of the retaining elements from the receiving position to the retracted position.

Preferably, the pod holder comprises guiding parts that are configured to guide the movements of the retaining and positioning elements between the retaining position and the retracted position. These guiding parts can comprise slopes oriented to slide along surfaces of the peripheral area of the downstream enclosing part according to diverging directions.

In one preferred embodiment, for each of the retaining and positioning element, the pod holder comprises guiding parts comprising first slopes close to the bottom of the arc-shaped ridges and second slopes close to the top of the arc-shaped ridges.

Preferably, the pair of retaining and positioning elements are made of one single piece of material. As a result, both elements are moved simultaneously and they are better guided.

In particular the pair of retaining and positioning elements can be linked by a transversal bridge extending below the downstream piercing arrangement.

Preferably, the pod holder is able to be locked in the peripheral area of the downstream enclosing part and to remain locked until the operation of ejection of the pod is finished, preferably until a new pod is introduced in the insertion section.

By locking the pod holder in the peripheral area during the complete operation of ejection of the pod, there is no risk that the pair of retaining and positioning elements move during the movement of the upstream pod enclosing part back to the open position, and then no risk that at least one of the pair of retaining and positioning elements pinch or retain the flange of the extracted pod while the cage progressively liberates the extracted pod.

Preferably, the side of the upstream enclosing part facing the downstream enclosing part comprises rising elements configured to push the pair of retaining and positioning elements during the longitudinal translation of the upstream enclosing part from the open position to the closed position.

According to one embodiment, the peripheral area of the downstream enclosing part is able to pivot around a bottom transversal axis (YY') and in the upstream direction.

Accordingly, during the operation of ejection of the pod, the peripheral area of the downstream enclosing part can be pivoted around this bottom transversal axis (YY') and can push and incline the pod which helps its ejection from the extraction device.

Preferably, according to this embodiment, the upstream pod enclosing part comprises pulling means configured to engage with upper parts of the peripheral area of the downstream enclosing part, when the upstream pod enclosing part is moved from the closed position for forming an extraction chamber enclosing the pod during extraction to an open position for ejecting the pod.

Accordingly, the ejection of the pod is automatically facilitated by the movement of the upstream enclosing part.

Preferably, according to this embodiment, the central part of the peripheral area of the downstream enclosing part, the downstream plane piercing arrangement and the cage of the upstream enclosing part form the extraction chamber.

Accordingly, during extraction, the lid of the pod is supported by and in contact with :
- the downstream plane piercing arrangement, and
- the central part of the peripheral area of the downstream enclosing part too.

The downstream plane piercing arrangement is usually circular and the central part of the peripheral area of the downstream enclosing part forms an annular area. Preferably, this annular area supports the sidewall of the pod body. Consequently, when the pod is ejected and pushed by the pivotable peripheral area of the downstream enclosing part, this central annular part of this peripheral area pushes the sidewall which is a part of the pod that is quite more solid and resistant than the flange after extraction of the beverage.

This embodiment prevents that the pivotable peripheral area of the downstream enclosing part pushes the pod flange only. Actually, due to the paper nature of the material the pod is made of, the extraction of the pod leads to the wetting of the walls of the pod that become soft and tearable ; in particular the flange becomes very soft and pushing the flange can be insufficient to eject the pod. In addition, the nature of the material makes the ejection of the pod difficult due to the fact that the wet and soft material of the pod can stick to the downstream piercing arrangement in particular when spikes are present. By pushing the annular area of the lid that faces the sidewall, the risk of tearing and opening the pod in this area is reduced during pod ejection.

Preferably, the opened end of the cage defined by the upstream enclosing part is covered by a seal and this seal comprises a ridge configured to press the flange of the pod against the peripheral area of the plate of the downstream part.

Accordingly, the flange of the pod is pinched between the seal and the peripheral area of the downstream enclosing part strongly. The paths for liquid due to the presence of wrinkles around the flange of the pod are closed by the engagement of the seal.

Even more preferably, the peripheral area of the downstream enclosing part comprises a groove conformal to the shape of the ridge of the seal.

In a second aspect of the invention, there is provided a beverage preparation machine comprising an extraction device such as described above.

Generally, this beverage machine comprises a liquid supply system connected to the upstream enclosing part. This liquid supply system can comprise :
- a liquid supply such as a liquid tank,
- pumping means to drive liquid form the liquid supply to the extraction device,
- heating and/or cooling means to adapt the temperature of the liquid before it is introduced inside the pod.

The liquid is usually water.

This beverage machine can comprise recognition means as mentioned above.

This beverage machine usually comprises a motor to actuate the movement of the enclosing parts of the extraction device

Usually, this beverage machine comprises a control unit configured to control the movement of the enclosing parts of the extraction device and the supply of liquid to the extraction device. The control unit can be configured to control the recognition operation of the recognition device if present or to display information to the user.

In a third aspect of the invention, there is provided a system comprising an extraction device such as described above and a pod or comprising a beverage preparation machine such as described above and a pod, wherein this pod comprises :
- a pod body, said pod body comprising :
   . a side wall and a bottom wall defining a chamber, said chamber extending axially between the bottom and a top opening,
   . a circumferential annular flange projecting radially outward from the top opening, said flange comprising a top surface opposite to the chamber with respect to the opening,
   said pod body containing a beverage ingredient,
   and
- a top lid attached to the top surface of the circumferential flange, said top lid closing the top opening of the pod body.

In such systems :
- the pod holder holds the pod in front of the downstream plane piercing arrangement, when the pod holder is in the receiving position, and
- the pod holder stops any interaction with the pod, when the pod holder is in the retracted position.

In a fourth aspect, there is provided a method to prepare a beverage with a device such as described above, comprising the steps of :
- introducing a pod in the pod catcher of the extraction device while the upstream and downstream enclosing parts are in the open position and the pod catcher is in the receiving position,
- moving the upstream and downstream enclosing parts to the closed position, which enables the movement of the pod catcher to the retracted position,
- introducing liquid in the pod through the upstream enclosing part, which enables the beverage preparation and dispensing from the downstream enclosing part,
- moving the upstream and downstream enclosing parts to the open position, which enables the ejection of the pod.

In general, the extraction device is configured for implementing the step of moving the upstream and downstream enclosing parts to the open position just after the extraction and dispensing of the beverage to avoid drying of the lid on the downstream piercing arrangement and to facilitate ejection. Otherwise, a part of the lid may remain attached and may block the device.

In the preferred embodiment, the pod holder of the extracting device is able to be locked in the peripheral area of the downstream, and the method comprises an additional pod catcher release step, wherein the upstream enclosing parts is moved to an intermediate position between the closed and the open positions in order to move the pod catcher from the retracted to the receiving position.

This final step is implemented after the pod was ejected and before a new pod is introduced.

In a fifth aspect, there is provided the use of a pod for preparing a beverage in a device for extracting a beverage ingredient such as described above or with a beverage machine such as described above or with a system such as described above,
said pod comprising :
- a pod body, said pod body comprising :
   - a side wall and a bottom wall defining a chamber, said chamber extending axially between the bottom and a top opening,
   - a circumferential annular body flange projecting radially outward from the top opening, said body flange comprising a top face opposite to the chamber with respect to the opening, said pod body containing a beverage ingredient,
   and
- a top lid comprising a peripheral annular area attached to the top face of the body flange, said top lid closing the top opening of the pod body.

Preferably, the body and the lid of the pod are made of paper material.

In one preferred embodiment, the paper material is a multilayer paper material comprising a layer of paper coated with at least a plastic film, preferably a compostable plastic film. This compostable plastic film can be a multilayer plastic film. This film can provide additional properties such as air barrier and sealants to avoid delamination.

Preferably, the body is made of a paper material presenting a thickness of at least 100 µm, preferably at least 120 µm.

Preferably, the pod body is manufactured by forcing a disc of paper material in a mould. In particular, the pod body can be formed from a disc of paper material by a blank sliding process, by a stamping process or a deep-drawing process.

Such manufacture of the body generally leads to inconsistency on the diameter of the body, particularly when the paper material is thick.

Such manufacture generally leads to the presence of wrinkles on the pod, particularly when the paper material is thick.

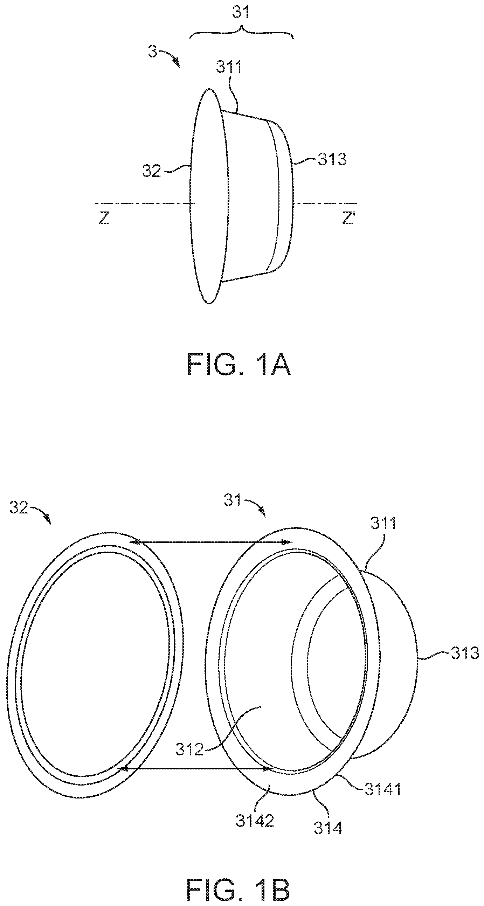

In the present application :
- the term "pod" is used to broadly designate any kind of single-dose container suitable for preparing beverages or other edible products such as capsule, cartridge, portioned or individual package without limitation to the shape of this container, in particular the shape of the body, or the types of piercing means needed to extract the beverage therefrom.
- the term "longitudinally" refers to the orientation of the two enclosing parts one to the other and their movement along the longitudinal axis XX'. Accordingly, the term "transversally" refers to the orientation that is transverse or perpendicular to that longitudinal orientation. Generally, the longitudinal and transverse orientations extend in a horizontal plane. The terms "lateral" is defined by reference to the vertical axis including the longitudinal axis XX'.
- the term "vertically" and "downwardly" refers to the movement of the pod in the extraction device from its introduction above the two enclosing parts to its ejection below the two enclosing parts. The terms "upper" and "lower" refer to this vertical axis too. The terms "top" and "bottom" refers to this vertical axis when an element of the extraction is considered.
- for the pod, the terms "top" and "bottom" are defined in accordance with the description of Figure 1A.
- the terms "upstream" and "downstream" refer to the path of liquid through the extraction device from the upstream enclosing part to the downstream enclosing part.

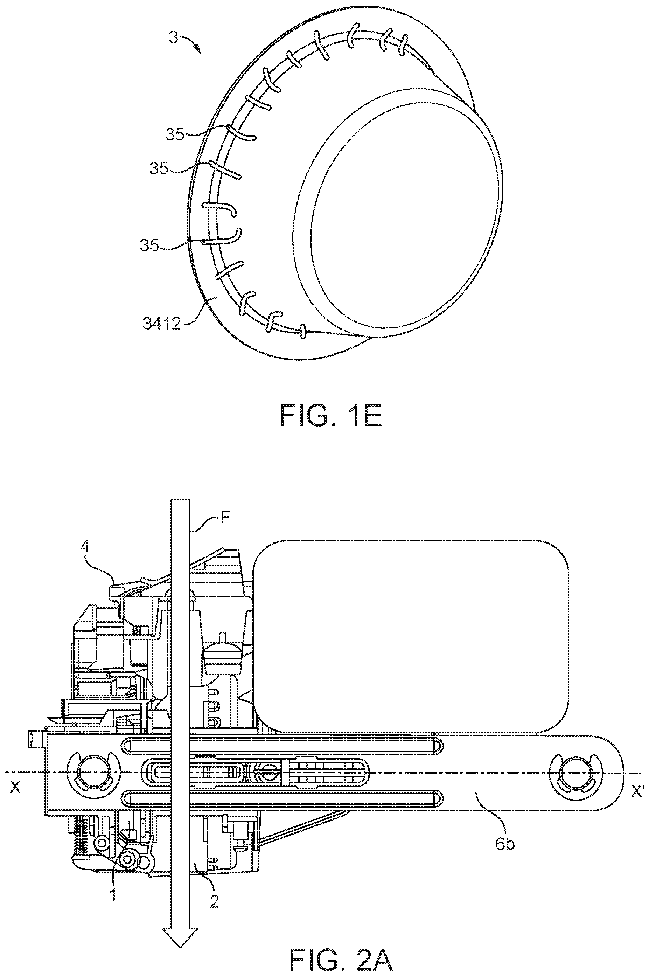

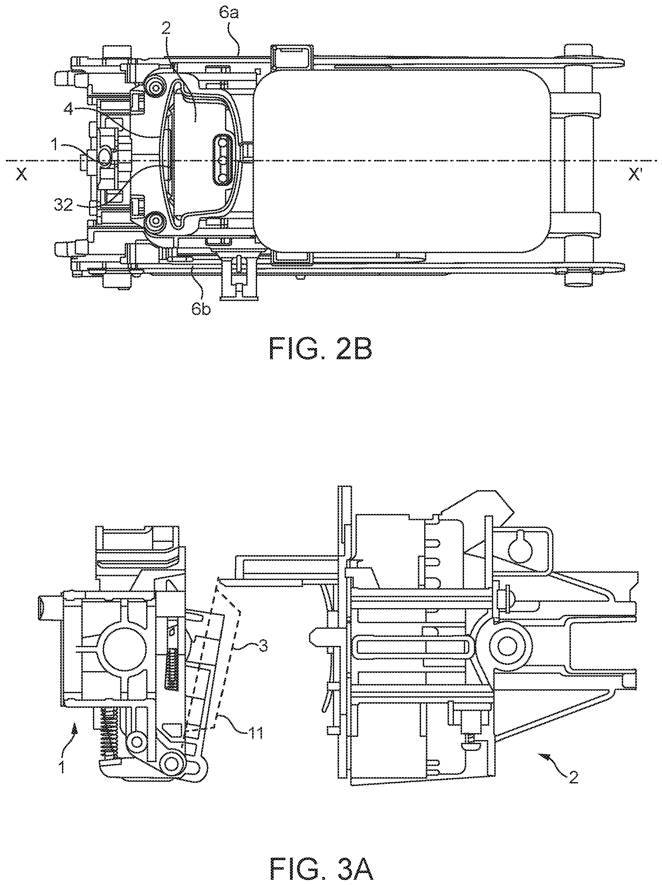

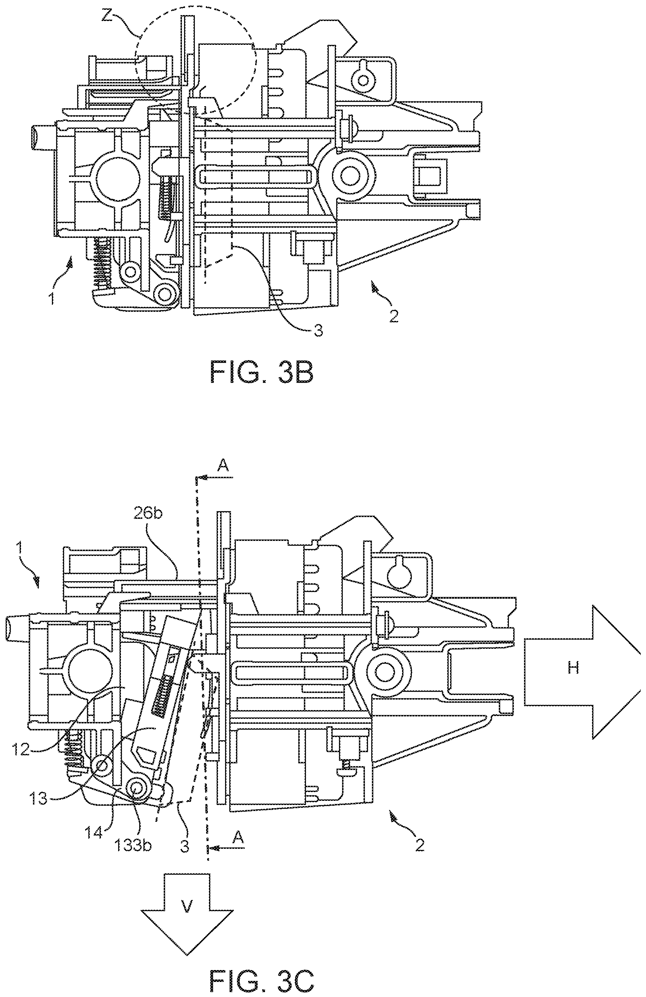

Generally, these terms are used to describe the relational positioning of features of the extraction device. These terms should be understood to refer to said device in its normal orientation when positioned in a beverage machine for the production of a beverage as shown in the figures 2A, 2B, 3A, 3B and 3C.

The above aspects of the invention may be combined in any suitable combination within the scope of the appended claims. Moreover, various features herein may be combined with one or more of the above aspects to provide combinations other than those specifically illustrated and described as long as said combinations do not contradict or extend beyond the scope of protection defined by the appended claims. Further objects and advantageous features of the invention will be apparent from the claims, from the detailed description, and annexed drawings.

### Brief description of the drawings

Specific embodiments of the invention are now described further, by way of example, with reference to the following drawings in which :
- Figures 1A to 1E are different perspective view of pods used in the extraction device of the present invention,
- Figures 2A and 2B are side and top views of a device according to the present invention in the closed position,
- Figure 3A is an isolated side view of the upstream and downstream pod enclosing parts of a device according to the present invention in the opened position,
- Figure 3B is an isolated side view of the upstream and downstream pod enclosing parts of Figure 3A in the closed position,
- Figure 3C is an isolated side view of the upstream and downstream pod enclosing parts of Figure 3A in the position of ejection of the pod,
- Figure 4A is an isolated perspective view of the downstream pod enclosing part of Figure 3A,
- Figure 4B is an isolated perspective view of the downstream pod enclosing part of Figure 3B,
- Figure 4C is an isolated perspective view of the cross section of Figure 3C along plane AA.
- Figure 4D is a magnified view of a part of Figure 4C,
- Figure 5 is an isolated perspective view of the upstream pod enclosing part of Figures 3A and 3B,
- Figure 6 is an isolated perspective view of the retaining and positioning elements of the downstream pod enclosing part of Figures 3A and 3B.
- Figure 7 is an isolated view of the downstream plane piercing arrangementand its peripheral area of Figures 3A and 3B,
- Figure 8 is a top view of Figure 3C,
- Figure 9 is a longitudinal cross section of the Figure 3B magnifying the area Z of interaction of the enclosing parts.

### Detailed description of exemplary embodiments

**Figures 1A** (perspective view) **and 1B** (exploded view) illustrate the pods 3, 3' that can be used in the extraction device of the invention.

The pod 3 comprises a pod body 31 with one sidewall 311 that extends axially from a bottom wall 313 towards a top. The sidewall 311 extends towards a top opening 312. At the top opening 312, the body comprises a circumferential annular flange 314 that extends radially outward from the sidewall 311 along the circumference of the opening 312.

The flange comprises a top surface 3142 facing the top and a bottom surface 3141. Generally, any transversal cross section of the body is circular from the bottom to the top and the flange is circular too.

The body delimits a chamber for containing a beverage ingredient.

This beverage ingredient packed is preferably an ingredient able to be extracted like roast and ground coffee.

In a less preferred manner, the beverage ingredient can be tea leaves or a water soluble powder ingredient such as : instant coffee powder, milk powder, cream powder, instant tea powder, cocoa powder, soup powder, fruit powder or mixture of said powders, or even a soluble liquid ingredient or a beverage concentrate such as a syrup or milk concentrate. The powders can be agglomerated or sintered.

The capsule comprises a lid 32 that is fixed, sealed or attached to at least a part of the top surface 3142 of the circumferential flange and accordingly covers and closes the top opening 312.

The bottom wall 313 is adapted to be pierced so that liquid can be injected in the pod through the pierced openings.

The lid 32 is adapted to be opened by relative engagement with a piercing arrangement under the effect of the liquid pressure increase inside the pod during injection of liquid.

The pod shape is symmetric relatively to the central axial axis ZZ' extending from the bottom wall to the lid and the pod shape is asymmetrical relatively to the plane of the lid and the flange.

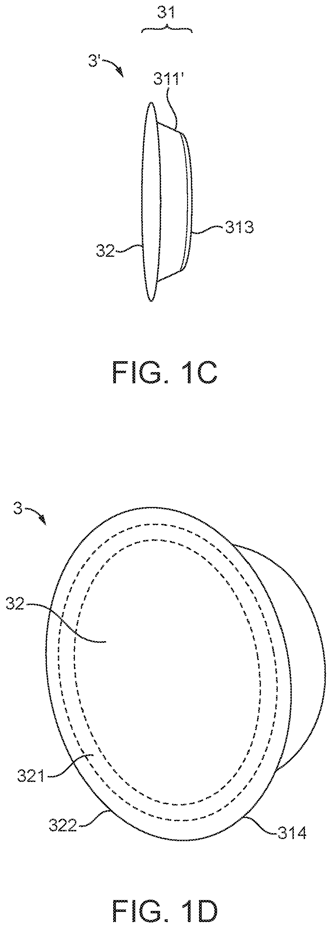

**Figure 1C** illustrates another pod 3' that can be used in the extraction device of the invention and that differs from the pod 3 of Figure 1A only by the longitudinal size (along ZZ') of the pod bodies 31'. The pod body 31 of the big pod 3 defines an ingredient chamber with a bigger volume than the pod body 31' of the small pod 3', the side wall 311 being higher than the side wall 311'. The diameter of the lids 32, 32' of the small and big pods are identical.

This difference in sizes enable the preparation of different beverages, preferably different coffee beverages like ristretto, espresso, lungo (long cups), americano, ...

Other sizes than those illustrated can be provided, like an intermediate size.

When the pod comprises roast and ground coffee, quantities of coffee can range between 4 and 15 g. The axial dimension of the pod can extend from 5 mm to 30 mm for a same diameter of the body of about 53 mm.

Preferably the pods 3 are essentially made of a biodegradable or compostable material, preferably a home compostable material since extracted coffee cakes can easily be made composted at home.

Preferably, the material of the pod comprises a paper layer. This paper layer is formable, i.e. a sheet of paper can be given a three-dimensional shape that is the form of the body of the above described pod. Contrary to common pods made of filter paper, this paper is thick and keep the three-dimensional shape provided during a shaping step of manufacturing of the pod.

Preferably, the paper layer of the pod can have a grammage of at least 20 g/m², preferably at most 150 g/m². The paper of the body can present a higher grammage than the paper of the lid because it needs to be stretched and deformed during manufacturing.

The grammage of the paper of the body can be comprised between 80 and 150 g/m².

The lid can present a grammage comprised between 20 and 120 g/m².

Both papers can present a grammage of about 100 g/m².

The material of the pod can comprise a layer of paper and some other materials to provide additional properties such as air barrier, stretchable or deformable properties. These additional properties can be provided with at least one plastic layer, for example as described in WO 2020/114995. Some additional layers of the body and of the lid can be different.

In fact, in order to shape the paper as a container for the beverage and to create a barrier to protect the beverage ingredient, the paper must be sufficiently thick. In addition, to create a barrier to atmosphere, in particular oxygen to which roast and ground coffee is particularly sensitive, the layer of paper is preferably coated with a compostable plastic film. Sealants layers are often necessary to attach the different layers and prevent delamination. For example, such a multilayer paper material can be the material described in WO 2020/114995 or in WO 2022/022899.

With such pod materials, the thickness of the multilayer paper material of the body can be about 200 µm and the thickness of the multilayer paper material of the lid can be about 140 µm which means that the thickness of the flange is usually greater than 200 µm, even greater than 300 µm.

The manufacturing of the pods comprises generally the steps of :
- providing a first sheet of deformable paper material of circular shape, the diameter of said first sheet being adapted to the size of pod to be produced (small or big),
- deforming said first sheet in order to shape the pod body with a flange therefrom. this operation is usually obtained by shaping the first sheet in a dedicated recess, die or mould that presents the shape of the pod body.
- filling the shaped body with a dose of beverage ingredient, preferably roast and ground coffee, and preferably compacting said dose of roast and ground coffee inside the shaped pod,
- providing a second sheet of material of circular shape, the diameter of said second sheet corresponding to the diameter of the lid of the pod, whatever the size of the pod to be produced (small or big),
- sealing this second sheet on the flange of the filled shaped body.

Due to the nature of the paper material, that is an heterogenous material (random position of the plant fibres in the sheet), and due to the thickness of the paper material, the shaping of the first sheet of material produces pods with particular features that impact the preparation of a beverage within an extraction device.

During the shaping of the first sheet of paper material by forcing a disc of this sheet in a mould, it was observed that the final diameter between the edges of the flange of the pod body was inconsistent. For example, to produce a final pod presenting a lid diameter of about 53 mm and a pod body diameter of about 48 mm with a first sheet presenting a thickness of about 200 µm and a diameter of 70 mm, it was observed that the diameter varied between 54.5 mm and 51.5 mm. These inconsistent values of the diameter impact the correct handling of the pod by the extraction device during the beverage preparation.

To avoid such inconsistency, the pods could be manufactured from largest sheets of paper material and the flange of the pod could be cut to a precise diameter after shaping or after the lid has been sealed to the body flange. Yet, such manufacturing process does not meet the requirements of a sustainable approach aiming at saving paper material and using only the needed quantity to produce the pod whatever the final aspect.

In addition, the shaping of the paper material in a mould leads to the creation of wrinkles 35 all along the periphery of the side wall 311 and of the bottom face 3142 of the flange as illustrated in **Figure 1E****.** Within the bigger pods, the wrinkles are even more important and deeper since the original diameter of the first sheet is quite larger than the final diameter of the pod. For example, with a first sheet disc presenting a thickness of about 200 µm and a diameter of 70 mm and used to produce a final pod presenting a lid diameter of about 53 mm and a pod body diameter of about 48 mm, the depth of the wrinkles in the formed body can vary between 25 and 200 µm. These wrinkles impact the tightness of the extraction chamber during the beverage preparation.

Finally, the particular nature of the paper material implies that the mechanical properties of the pod change before liquid, such as water, is introduced inside the pod and when the pod is filled with water. Once wet, the paper material loses its rigidity, become soft and easily tearable. Consequently, the handling of this pod is totally different between the step of introducing a new non-extracted pod inside the extraction device and the step of ejecting the wet and soft extracted pod from the extraction device.

**Figure 2A** is a side view of an extraction device according to the invention comprising an upstream pod enclosing part 2 and a downstream pod enclosing part 1 relatively translatable along a longitudinal axis XX'. Usually, this axis XX' is essentially horizontal. In Figure 2A, these two parts are in a closed position and form an extraction chamber configured to enclose a pod during extraction. The pod is introduced through an insertion section 4 positioned above the two enclosing parts 1, 2, from which it can fall by gravity to these two enclosing parts 1, 2. After extraction, the pod can fall by gravity again below these two enclosing parts 1, 2 when they move apart one from the other. The arrow F illustrates the movement of the pod from the insertion inside the extraction device to the ejection from said device.

The two pod enclosing parts 1, 2 are hold and movable between two lateral and longitudinal metal sheets 6a, 6b. At least one of these parts is movable in translation between these two sheets in order to assess different relative and functional positions. In the preferred illustrated embodiments, the downstream enclosing part 1 is fixed and only the upstream enclosing part 2 is movable back and forth along the longitudinal axis XX'.

**Figure 2B** is a top view of the extraction device in the same relative positions of the upstream pod enclosing part 2 and the downstream pod enclosing part 1. The insertion section 4, in particular its housing, is designed to enable the introduction of the pod 2 with its lid 32 facing the downstream pod enclosing part 1 and accordingly the piercing arrangement 12 of said enclosing part as developed below. Consequently, the user is urged to position correctly the asymmetric pod 3 inside the extraction device.

Preferably, this insertion section 4 can comprise a recognition device to recognise or identify the pod 2 that is introduced inside the extraction device. The recognition device can comprise
- a pod temporary blocking means to block the pod in a temporary recognition position, and
- a device to recognise the pod blocked in this temporary recognition position.

The recognition device is configured to enable the pod temporary blocking means to let the pod fall to the pod holder of the extraction device once the pod has been recognised.

**Figures 3A** **and** **3B** are isolated side views of the upstream and downstream pod enclosing parts 1, 2 of the extraction device of Figures 2A, 2B in different relative and functional positions. In these isolated views, the insertion section 4 and the longitudinal sheets 6a, 6b were removed for a better vision of the different elements of the parts 1, 2 . In addition, the position of the pod 3 is schematically illustrated in dotted lines.

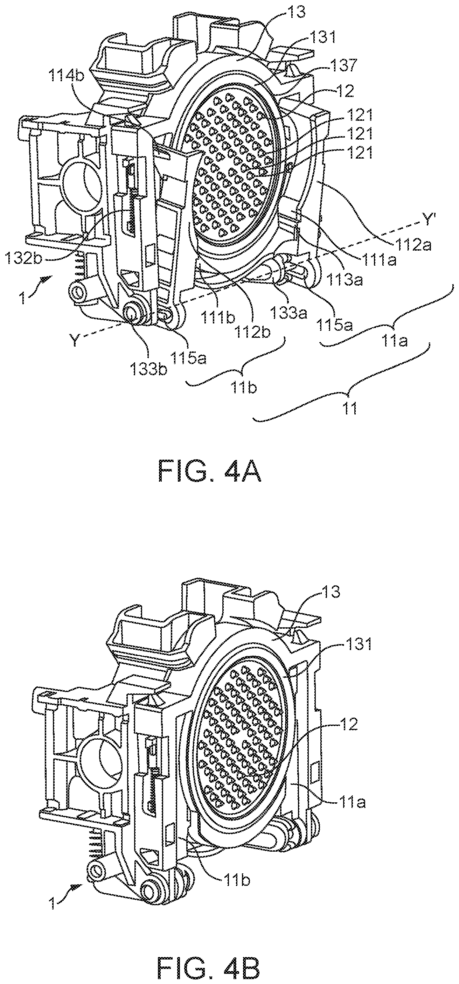

In **Figure 3A****,** the upstream and downstream pod enclosing parts 1, 2 are positioned in the open position for inserting a pod from the upper side. A pod holder 11 is visible in front of the downstream pod enclosing part 1 in a receiving position for receiving and holding the pod 3 as further described below in relation with Figure 4A.

In **Figure 3B****,** the upstream and downstream pod enclosing parts 1, 2 are positioned in the closed position and form an extraction chamber enclosing a pod during extraction. In that position, the pod holder 11 is in a retracted position as further described below in relation with Figure 4B.

**Figure 4A** is an isolated perspective view of the downstream pod enclosing part 2 of Figure 3A. The downstream part 1 defines a plate extending along a plane P perpendicular (that is transverse) to the longitudinal axis XX'. This plate comprises a central downstream plane piercing arrangement 12 for opening the lid 32 of the pod when the extracting liquid is introduced inside the pod and inflates the lid.

Usually, this central downstream plane piercing arrangement 12 is circular like the lid of the pod.

Opening happens by relative engagement of spikes with the lid under the effect of the rise in pressure of the injected liquid in the pod body chamber. This downstream plane piercing arrangement may comprise a rigid plate comprising opening elements 121 such as spikes, that can present the shape of cones or pyramids, optionally truncated at their ends, on its surface turned to the lid. In addition, the plate comprises traversing holes to evacuate the beverage dispensed from the opened lid to a tube or nozzle collecting and dispensing beverage to a drinking cup.

In addition, the plate comprises a peripheral area 13 surrounding that piercing arrangement 12.

The downstream part 1 comprises a pod holder 11 that is attached to the peripheral area 13. While being attached, the pod holder can be moved between two positions. In Figure 4A, the pod holder 11 is in the first position for receiving and holding the lid of the pod in front of the downstream plane piercing arrangement.

The pod holder 11 comprises a pair of elements 11a, 11b that retain and position the pod when this pair is in the first receiving position. In this position of the pod holder, these elements retain vertically the pod, that is they stop the vertical fall of the pod falling from the insertion position. In addition, in this position, these elements position the lid of the pod in front of the downstream plane piercing arrangement 12, that is these elements align or centre the lid of the pod with the downstream plane piercing arrangement 12. Actually, due to the asymmetric shape of the pod, the centre of gravity of the pod is placed outside the plane of the lid and the introduced pod tips over in the space between the two enclosing parts if it is not retained longitudinally too.

Usually each of said elements of the pair comprises :
- a lower holding surface 111a, 111b that retain the pod vertically as it falls by gravity inside the device from the insertion section in between the two enclosing parts. This lower holding surface is positioned so that the lid of the pod is aligned with the downstream piercing arrangement,
   and
- a transverse arc-shaped ridge 112a, 112b that retain the pod longitudinally so that the lid of the pod remains essentially parallel or slightly inclined relatively to the downstream plane piercing arrangement 12. Preferably, these ridges extend in a transverse plane that is slightly inclined relative to the plane of the downstream plane piercing arrangement, this latest one being usually essentially vertical. This inclination provides a larger space for the insertion of the pod from the insertion section down to the pod holder and limits the risk of wrong road for the pod. Due to the fact that the pod presents asymmetrical shape versus the plane of the lid, the pod cannot stand in a balanced position when its lid is vertically oriented and even less when the size of the pod is largest one since its centre of gravity lies in the middle of the pod body. The transverse arc-shaped ridges can extend in a transverse plane that can be inclined relatively to the plane of the downstream plane piercing arrangement.

In the preferred illustrated embodiment, the retaining elements are attached to the bottom of the peripheral area 13 of the downstream plane piercing arrangementin a manner that enables the retaining elements to pivot around a transversal axis YY' in a loose manner. Accordingly, the retaining elements can move from their inclined position to a position in alignment with the plane of the plate defined by the downstream part, that is in retracted position.

This inclination provides the additional advantage of limiting the movement of the pod inside the pair of elements when they are moved from the receiving to the retracted position since during said movement, the path of movement of the part of the pod laying on the lower holding surfaces is kept very short.

Usually the pair of elements 11a, 11b present symmetric shapes along the central vertical plane comprising the longitudinal axis XX'.

The pair of retaining elements 11a, 11b are movable from the receiving position to a second retracted position at the lateral sides of the downstream plane piercing arrangement as illustrated in **Figure 4B** that is an isolated perspective view of the downstream pod enclosing part 2 of Figure 3B. In this situation, the pair of retaining and positioning elements 11a, 11b have been pushed from the receiving position to the retracted position by the upstream enclosing part 2 when said upstream enclosing part is being translated longitudinally from the open position to the closed position.

The pair of retaining elements are moved simultaneously, which is facilitated by the fact they are made of one single piece of material. In the specific illustrated embodiment, due to the inclination of the retaining elements, the movement of the retaining elements is a combination of translation and pivoting, each retaining elements 11a, 11b being attached to the bottom of the peripheral area 13 of the downstream plane piercing arrangementthrough a transverse shaft 133a, 133b respectively. The combination of translation and pivoting movements is obtained by connecting the shafts 133a, 133b in corresponding holes 115a, 115b respectively at the bottom of the retaining elements, said holes presenting a larger section than the section of the shaft providing a loose attachment to the shaft.

This combination of movements is particularly advantageous for the use of pods that present a thick flange and inconsistent diameter size because it reduces even more the risk of having a part of the flange remaining pinched by the retaining elements during their movement to the retraction position as further developed below.

During this movement of the retaining elements 11a, 11b from the receiving position to the retracted position, the retaining elements are progressively moved to the retracted position where they are aligned on the lateral sides of the downstream plane piercing arrangement 12. In the specific illustrated embodiment, the retaining elements are progressively moved to the downstream plane piercing arrangement 12.

During this movement of the retaining elements, the pod is moved from a position where its lid 32 is slightly inclined versus the plane of the piercing arrangement 12 to a position where the lid 32 extends along said plane. During this movement, the retaining elements 11a, 11b passes from the side of the bottom face 3142 of the flange of the pod to the side of the top face 3141 of the flange of the pod. During this movement, the flange 314 of the pod is successively pressed, curved and then released by the retaining elements 11a, 11b.

Due to the inconsistent size of the diameter of the pods used in the extraction device and to avoid that a part of the flange of some pods remain pinched by the retaining elements 11a, 11b, when that latter ones are in the retracted position, each of the retaining and positioning elements 11a, 11b move from the receiving position to the retracted position along diverging directions.

Consequently, in the receiving position, the pair of retaining and positioning elements 11a, 11b define an intermediate space that is sized to retain at least the smaller pods, that is the pods presenting the smallest diameters due to the inconsistent manufacturing. When these elements are pushed by the upstream enclosing part 2 from this receiving position to the retracted position, the diverging directions cause the space between these elements to increase which guarantees that a part of the flanges 314 of the pods presenting the biggest diameters do not remain pinched by these elements 11a, 11b in the retracted position and that the upstream enclosing part 2 is able to lean on the downstream enclosing part for forming the extraction chamber in an homogeneous manner all along the periphery of the pod flange.

A flange partially pinched in one of the retaining and positioning elements would lead to inequal closure, liquid leaking, impossibility to get the correct pressure increase and the correct extraction of the pod. The diverging directions of the elements during movement to the retracted position avoid that situation.

Preferably, the retaining and positioning elements 11a, 11b of the pod holder and/or the peripheral area 13 of the downstream plane piercing arrangement comprise guiding parts at their surfaces configured to guide the movements of the retaining and positioning elements between the retaining position and the retracted position. Usually, these guiding parts comprise slopes oriented to enable the retaining and positioning elements 11a, 11c to slide along surfaces of the peripheral area 13 of the downstream enclosing part according to diverging directions.

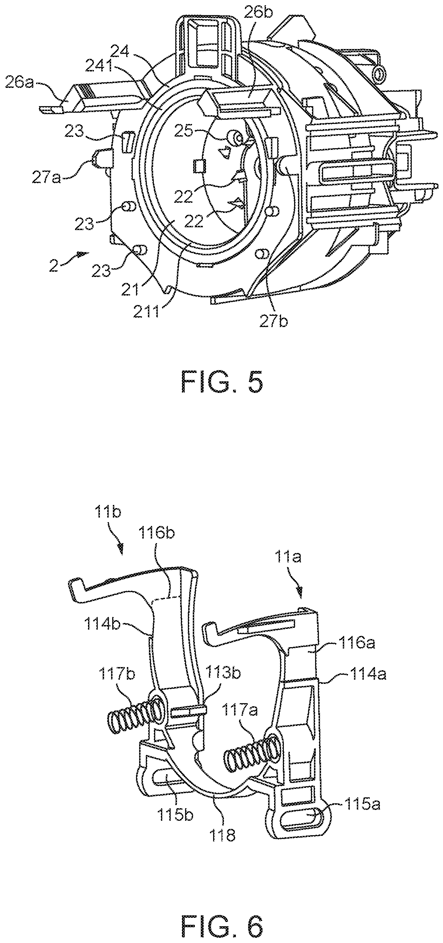

**Figure 6** shows the retaining and positioning elements 11a, 11b isolated from the extraction device of Figure 3B. Preferably and as illustrated, the two retaining elements are made of one single piece of material and are attached one tot the other through a transversal bridge 118. In this specific illustrated embodiment, each element 11a, 11b comprise a bottom slope 113a, 113b respectively at the internal bottom side of the element and a top slope 114a, 114b respectively at the external top side of the element. By internal, it is meant the side of the element that faces the downstream plane piercing arrangement12 and by external, it is meant the side of the element that faces at the opposite of the downstream plane piercing arrangement12.

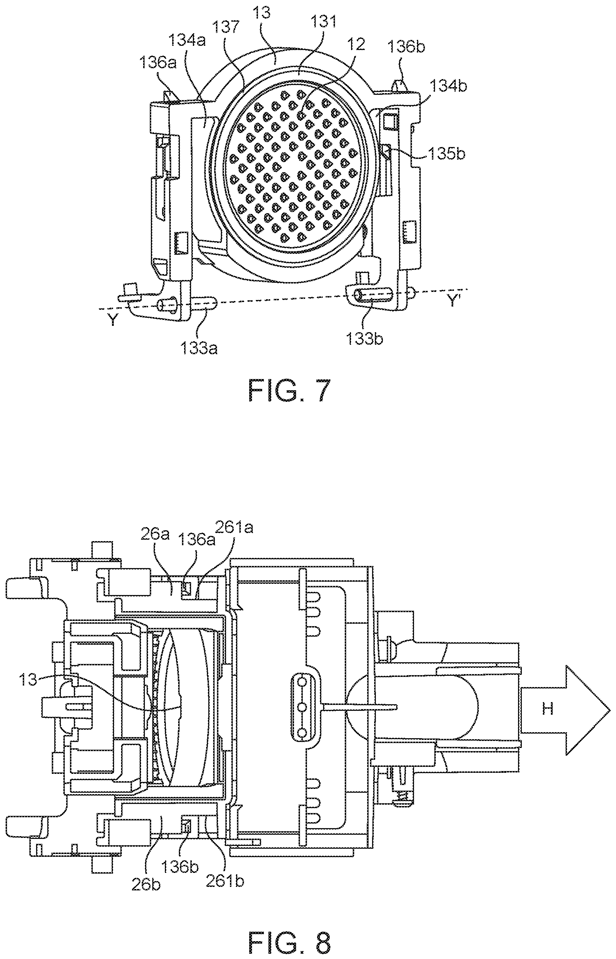

**Figure 7** shows the peripheral area 13 of the downstream plane piercing arrangement without the retaining and positioning elements 11a, 11b. The peripheral area 13 comprises two receiving areas 134a, 134b in the peripheral area 13 and on the lateral sides of the downstream plane piercing arrangement 12 which are configured to receive the elements 11a, 11b respectively in the retracted positions. The elements and the receiving areas are designed so that the guiding parts of the elements slide along the surfaces of the receiving areas during the movement from the receiving position to the retracted position and provide the diverging movement of the retaining and positioning elements.

For example, the bottom slope 113a (Figure 4A) or 113b (Figure 6) can consist in a bump rising from the internal surface of the element 11a or 11b and presenting a decreasing height from its upstream end to its downstream side. Similarly, the top slope 114a (Figure 6) or 114b (Figure 4A) can consist in a bump rising from the external surface of the element 11a or 11b and presenting an increasing height from its upstream end to its downstream end.

As a result, at the moment where the retaining elements 11a, 11b are retracted and bypass the flange of the retained pod, the distance between the retaining elements slightly increases which avoids the curved flange from remaining curved and pinched between one of the retaining elements and the peripheral area 13.

In one preferred embodiment, with pods 2 presenting a variability in manufacturing leading to pod diameters varying within +/- 1 mm, each retaining and positioning elements can diverge transversally by at least 0.5 mm, preferably 1 mm when it moves from the receiving position to the retracted position.

**Figure 5** is an isolated perspective view of the upstream pod enclosing part 2 of Figures 3A and 3B.

The upstream part defines an empty cage or cavity 21 for enclosing the pod body.

The upstream wall of the cage bears an upstream piercing arrangement 22 for opening the bottom wall 313 of the pod body. The upstream wall comprises at least one liquid injector 25 for supplying liquid into the pod through the holes opened in the bottom wall of the pod.

This upstream piercing arrangement can comprise piercers in the form of blades. These blades cam be designed and positioned to pierce the wall of the bottom of the pod body when the upstream and downstream pod enclosing parts are brought to the closed position as in Figure 3B. The liquid injector 25, such as a shower at the upstream wall of the cage, can introduce the extracting liquid inside the closed chamber and inside the pod through the pre-pierced openings.

Since pods 2 of different sizes can be introduced and extracted, the bottom of the cage 21 can be made movable to adapt the cage internal volume to the pod, for example as described in WO 2020/089404.

The edge 211 of the upstream opened face of the cage is surrounded by a seal 24 to ensure tightness of the chamber formed by the two parts 1, 2 in the closed position. This seal 24 covers the periphery of the edge of the cage.

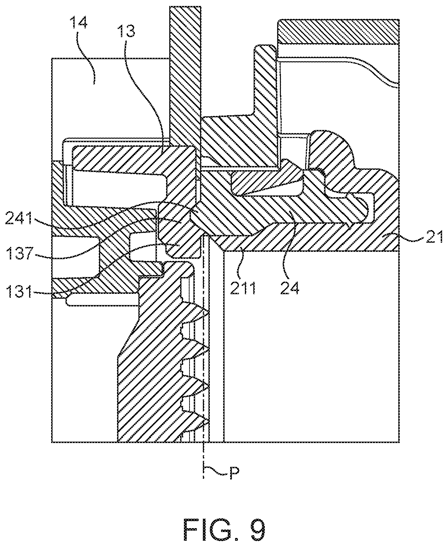

In one preferred embodiment and as illustrated in **Figure 9****,** instead of being flat, this seal 24 can comprise a ridge 241 rising from the plane P of the opened face of the cage in direction of the downstream part. This ridge extends along the whole periphery of the seal.

According to this preferred embodiment, preferably the downstream part 2 comprises a groove 137, that is conformal to the shape of the ridge of the seal, and that is configured to engage with said ridge 241 of the seal when the two enclosing parts 1, 2 are in the closed position and form the extraction chamber 5. This groove 137 can be designed in the peripheral area 13, in particular at the periphery of the central part 131. The pods 3 used with the extraction device are configured to be positioned inside the extraction chamber so that the flange 314 extends diametrically outside the annular central part 131 with the consequence that, when a pod 3 is being enclosed inside the extraction chamber 5, the ridge 137 of the seal forces a part of the annular flange 314 of the pod to enter inside the groove 137 along its whole periphery.

As illustrated in **Figure 5****,** the downstream side of the upstream enclosing part comprises rising elements 23 configured to push the pair of retaining and positioning elements 11a, 11b during the longitudinal translation of the upstream enclosing part from the open position to the closed position. These rising elements 23 are positioned to contact different parts of the retaining and positioning elements from the top to the bottom of said retaining and positioning elements in order to guarantee a progressive and homogeneous movement of these elements 11a, 11b to their retracted position.

In addition, the upstream enclosing part 2 can comprise two longitudinal protrusions 26a, 26b extending at the downstream face of the upstream pod enclosing part, of which function is described below.

Preferably, each of the retaining and positioning elements 11a, 11b can be locked in the retracted position during the extraction of the pod and during the ejection of the pod. **Figure 7** illustrates the locker 135b of one of the retaining and positioning element 11b. This locker is a spring loaded bolt that can be moved downwardly by the retaining and positioning element 11b during the movement of said element to the retracted position and that can cooperate with a locking surface 116b of the retaining and positioning element (illustrated in dotted lines in Figure 6 since present on the non-visible side of element 11b) afterwards so that the retaining and positioning element is not free to move back to the upstream direction as.

In this particular embodiment, this locker 135b can be designed so as to extend up to the upper side of the peripheral area and so as to form a pin 136a rising upwardly at this upper side. This pin 136a presents an inclined surface so that when the upstream enclosing part 2 is moved to the downstream enclosing part 1, its longitudinal protrusion 26a slides on said spring loaded pin 136 and pushes it downwardly, facilitating the movement of the pod catcher to the retracted position.

Preferably, each of the two longitudinal protrusions 26a, 26b (Figure 5) extending at the downstream face of the upstream pod enclosing part present a respective indentation 261a, 261b (as illustrated in **Figure 8****)** that is configured to enable the locking of the pod catcher 11 once the two parts 1, 2 are in the closed position. These indentations 261a, 261b release the downwards force exerted on the spring loaded lockers 135a, 135b once they bypass the respective pins 136a, 136b.

In addition, with the aim of locking the retaining and positioning elements 11a, 11b, the upstream enclosing part 2 comprises side lockers 27a, 27b (Figure 5) designed and positioned to help the movement of the lockers 135a, 135b to their locking positions. In fact, it may be observed that the springs, such as spring 132b in Figure 4A, of the lockers 135a, 135b can be dirtied by some beverage liquid and less prompt to release the lockers.

Preferably, the peripheral area 13 of the downstream enclosing part is pivotable around a bottom transversal axis (YY').

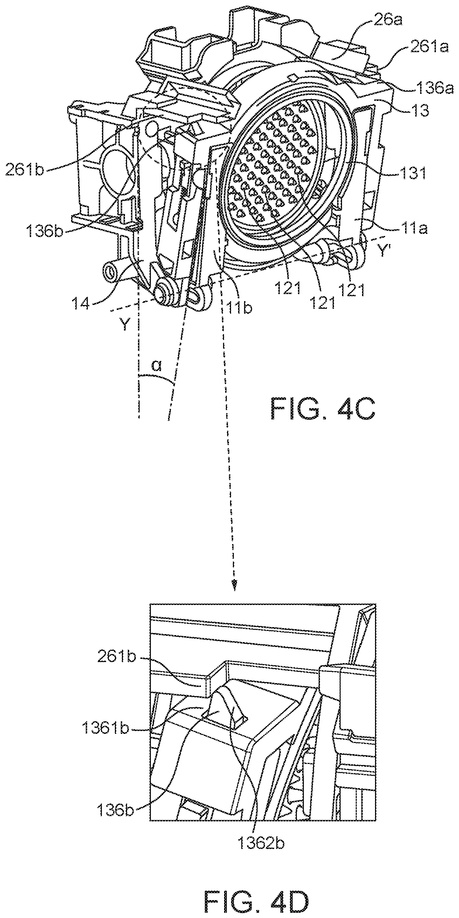

**Figure 3C** illustrates the moment where the upstream pod enclosing part 2 is being moving from the closed position of Figure 3B to a pod ejection position as showed by arrow H. At that moment, the peripheral area 13 of the downstream enclosing part is pulled by the upstream enclosing part 2 and made pivoted around the shafts 133a, 133b oriented along the transversal axis YY' and attached to the chassis 14 of the downstream enclosing part. This pivoting movement leads to an inclination of the peripheral area 13 which forces the ejection of the extracted pod 2 as illustrated by the arrow V. This pulling effect is obtained by the cooperation between :
- the two longitudinal protrusions 26a, 26b extending at the downstream face of the upstream pod enclosing part, and
- the two corresponding pins 136a, 136b at the upper side of the peripheral area 13,
as illustrated in **Figure 8****,** top view of Figure 3C, and in **Figure 4C** cross section of Figure 3C along plane AA.

**Figure 4D** is a magnified view of one pair 261b, 136b of these interacting protrusions and pins : the downstream side 1361b of the pin is designed so that the edge 261b of the indentation pushes said pin to the upstream direction. Consequently, the whole peripheral area 13 is pushed simultaneously and is pivoted around the bottom shafts 133a, 133b to which it is attached. Figure 4C shows the angle α of inclination of the peripheral area plane compared to its original orientation along the chassis 14. In the illustrated embodiment, this angle represents few degrees. This angle can vary with the dimensions and the construction of the two enclosing parts.

The whole peripheral area 13 is pivoted, while the central piercing arrangement 12 remains immobile. This movement of the peripheral area and of the pod away from the piercing arrangement 12 guarantees that the extracted pod 2 is effectively ejected and does not remain partly attached to the piercing arrangement in particular the spikes 121 if present. Actually, when a pod made of a compostable material like thick paper is used, the properties of such material change after it has been contacted by liquid un particular water. In particular, when in contact with aqueous liquid, the material of the lid retains liquid, inflates, goes soft, which makes it closely attached to the piercing arrangement.

As a result, the simple return of the upstream enclosing part 2 to the opened position is not sufficient to guarantee the ejection of the pod from the extraction device.

The inclination of the peripheral area helps the ejection by inclining the pod downwardly and away from the piercing arrangement 12. This orientation of the pod helps its ejection since, due to its asymmetrical shape, its centre of gravity pulls its down and out of the spikes. For this reason, it is not necessary to provide inclination along an important angle.

In addition, preferably, the inclinable peripheral area 13 comprises an annular central part 131 that forms part of the extraction chamber when the upstream and downstream pod enclosing parts 1, 2 are in the closed position as illustrated in Figure 7 and **Figure 9****.**

In particular, when a pod 3 is in the closed extraction device like in Figure 3B, this annular central part 131 supports an annular area 321 of the lid that is diametrically smaller than the flange of the lid and next to that flange as illustrated in **Figure 1D**. This annular area 321 of the lid faces an area that is close to the edge of the top opening 312 of the body and consequently faces the top of the sidewall 311 of the pod.

Consequently, during the ejection movement, this annular central part 131 does not support and does not push the flange 314 of the pod but does push this the whole circumference of the top of the sidewall 311. As a result, when the peripheral area 13 is pulled and inclined, its central part 131 pushes the whole circumference of the annular area 321 of the lid, which annular area supports the side wall 311. The change in the properties of the paper material of the pod comprise the rigidity of the material too. It was observed that once wet, the material becomes easily tearable too. As a result, if the peripheral area 13 pushes the flange 314 of the extracted pod only, the risk this flange is torn and the central part of the lid remains attached to the spikes of the piercing arrangement is important with the two undesired consequences that the pod is not ejected and part of the extracted beverage ingredient, like a coffee cake, goes out of the pod and dirties the internal parts of the extraction device.

But, by making this annular central part 131 of the peripheral area part of the brewing chamber inclinable with the peripheral area, the risk of tearing is avoided and efficient and proper ejection of the pod is obtained.

Preferably, the pivotable peripheral area 13 becomes spring loaded when it is pulled and pivoted by the upstream closing part 1 so that when the upstream closing part 1 releases the pivoted peripheral area, the latter automatically comes back to its position around the downstream piercing arrangement such as illustrated in Figure 4B.

In general, the extraction device is configured for ejecting the pod just after the extraction to avoid drying of the lid around the spikes and to facilitate ejection

In order to be able to extract a new pod, the retaining and positioning elements 11a, 11b must be released from their locked positions illustrated in Figure 4B to their position configured to receive a new pod as illustrated in Figures 3A and 4A. This operation can be obtained by moving the upstream enclosing part 2 in direction of the downstream enclosing part 1 until its longitudinal protrusions 26a, 26b slide on the spring loaded pins 136a, 136b so as to push downwardly these pins and simultaneously the spring loaded lockers 135a, 135b. As a result, the looking surfaces 116a, 116b are not retained any longer ; the retaining and positioning elements 11a, 11b, which are spring loaded by springs 117a, 117b in the retracted position, make these elements come back to their original position in front of the downstream piercing arrangement 12.

In this operation, the upstream enclosing part 2 is moved in direction of the upstream enclosing part 2 in an intermediate position between the open and closed positions of Figures 3A and 3B. In this position the longitudinal protrusions 26a, 26b are able to slide on the spring loaded pins 136a, 136b but the rising elements 23 at the downstream side of the upstream enclosing part remain sufficiently far from the first enclosing part 1 to enable the movement of the pod catcher 11 and to prevent the indentation 261a, 261b (as illustrated in Figure 8) to lock the pod catcher again.

Accordingly, the downstream edge of the longitudinal protrusions 26a, 26b and the position of their indentations 161a, 261b are positioned relatively to corresponding pins 136a, 136b at the upper side of the peripheral area 13 to :
- either lock the pod catcher in its retracted position, or
- release the pod catcher from said retraced position.

Although the invention has been described with reference to the above illustrated embodiments, it will be appreciated that the invention as claimed is not limited in any way by these illustrated embodiments.

Variations and modifications may be made without departing from the scope of the invention as defined in the claims. ,

As used in this specification, the words "comprises", "comprising", and similar words, are not to be interpreted in an exclusive or exhaustive sense. In other words, they are intended to mean "including, but not limited to".

### List of references in the drawings :

| | |
|---|---|
| downstream enclosing part | 1 |
| pod holder | 11 |
| retaining and positioning elements | 11a, 11b |
| holding surface | 111a, 111b |
| arc-shaped ridge | 112a, 112b |
| guiding parts | 113a, 113b, 114a, 114b |
| hole | 115a, 115b |
| locking surface | 116a, 116b |
| spring | 117a, 117b |
| bridge | 118 |
| downstream plate piercing arrangement | 12 |
| spikes | 121 |
| peripheral area | 13 |
| central part | 131 |
| spring | 132b |
| shaft | 133a, 133b |
| receiving area | 134a, 134b |
| ramp | 1341a, 1341b |
| pod holder locker | 135a, 135b |
| pin | 136a, 136b |
| groove | 137 |
| chassis | 14 |
| upstream enclosing part | 2 |
| cage | 21 |
| edge | 211 |
| upstream piercing arrangement | 22 |
| rising elements | 23 |
| seal | 24 |
| ridge | 241 |
| liquid injector | 25 |
| protrusion | 26a, 26b |
| indentation | 261a, 261b |
| side locker | 27a, 27b |
| pod | 3, 3' |
| body | 31, 31' |
| side wall | 311, 311' |
| top end | 3111 |
| top opening | 312 |
| bottom wall | 313 |
| annular flange | 314 |
| top face | 3141 |
| bottom face | 3142 |
| wrinkles | 35 |
| lid | 32 |
| annular area | 321 |
| peripheral annular area | 322 |
| beverage ingredient | 33 |
| paper disc | 300 |
| insertion section | 4 |
| extraction chamber | 5 |
| lateral sheet | 6a, 6b |

## Claims

1. A device for extracting a beverage ingredient by supplying an extraction liquid such as heated water into a pod,
said pod (3, 3') comprising :
- a pod body (31), said pod body comprising :
. a side wall (311) and a bottom wall (313) defining a chamber, said chamber extending axially between the bottom and a top opening (312),
. a circumferential annular flange (314) projecting radially outward from the top opening, said flange comprising a top surface opposite to the chamber with respect to the opening, said pod body containing a beverage ingredient (33),
and
- a top lid (32) attached to the top surface of the circumferential flange, said top lid closing the top opening of the pod body,
and
said device comprising :
- a fixed downstream pod enclosing part (1) and a movable upstream pod enclosing part (2), said upstream pod enclosing part being translatable along a longitudinal axis (XX') between an open position for inserting and/or ejecting the pod (3) and a closed position for forming an extraction chamber (5) enclosing the pod during extraction,
- the upstream part (2) defining a cage (21) and bearing an upstream piercing arrangement (22) for opening the bottom wall (313) of the pod and a liquid injector (25),
- the downstream part (1) defining a plate transverse to the longitudinal axis (XX') and, said plate comprising :
. a downstream plane piercing arrangement (12) for opening the lid (32) of the pod,
and
. a peripheral area (13),
and
- an insertion section (4) for inserting the pod in the device, said insertion section being designed to position the pod with the lid facing the downstream piercing arrangement (12), and
- a pod holder (11), said pod holder being attached to said peripheral area (13) of the downstream part_and said pod holder being movable between :
. a receiving position for receiving and holding the lid (32) of the pod in front of the downstream plane piercing arrangement (12), and
. a retracted position at the lateral sides of the downstream plane piercing arrangement (12),
and
said pod holder (11) comprising a pair of retaining and positioning elements (11a, 11b), each of said elements comprising a lower holding surface (111a, 111b) and a transverse arc-shaped ridge (112a, 112b), and
said pair of retaining and positioning elements (11a, 11b) being pushable from the receiving position to the retracted position by the upstream enclosing part (2) when said upstream enclosing part is translated longitudinally from the open position to the closed position, and wherein the retaining and positioning elements (11a, 11b) move from the receiving position to the retracted position along diverging directions.

2. A device according to Claim 1, wherein the pod holder (11) comprises guiding parts (113a, 113b, 114a, 114b) configured to guide the movements of the retaining and positioning elements between the retaining position and the retracted position, said guiding parts comprising slopes oriented to slide along surfaces of the peripheral area (13) of the downstream enclosing part according to diverging directions.

3. A device according to the precedent claim, wherein, for each of the retaining and positioning element (111a, 111b), said guiding parts comprise first slopes close to the bottom of the arc-shaped ridges and second slopes close to the top of the arc-shaped ridges.

4. A device according to any one of the precedent claims, wherein the pair of retaining and positioning elements are made of one single piece of material.

5. A device according to any one of the precedent claims, wherein the pod holder (11) is able to be locked in the peripheral area (13) of the downstream enclosing part and to remain locked until the operation of ejection of the pod is finished, preferably until a new pod is introduced.

6. Beverage preparation machine comprising an extraction device according to any one of Claims 1 to 5.

7. System comprising an extraction device according to any one of Claims 1 to 5 and a pod, or a beverage preparation machine according to Claim 6 and a pod,
wherein said pod (3, 3') comprises :
- a pod body (31), said pod body comprising :
. a side wall (311) and a bottom wall (313) defining a chamber, said chamber extending axially between the bottom and a top opening (312),
. a circumferential annular flange (314) projecting radially outward from the top opening, said flange comprising a top surface opposite to the chamber with respect to the opening, said pod body containing a beverage ingredient (33),
and
- a top lid (32) attached to the top surface of the circumferential flange, said top lid closing the top opening of the pod body.

8. Method to prepare a beverage with a device according to any one of Claims 1 to 5 or a beverage machine according to Claim 6 or a system according to Claim 7, said method comprising the steps of :
- introducing a pod in the pod catcher (11) of the extraction device while the upstream and downstream enclosing parts (1, 2) are in the open position and the pod catcher (11) is in the receiving position,
- moving the upstream and downstream enclosing parts (1, 2) to the closed position and moving the pod catcher (11) to the retracted position
- introducing liquid in the pod through the upstream enclosing pat and collecting beverage from the downstream enclosing part,
- moving the upstream and downstream enclosing parts (1, 2) to the open position.

9. Method according to the precedent claim, wherein the pod holder (11) of the extracting device is able to be locked in the peripheral area (13) of the downstream, and
wherein the method comprises an additional pod catcher release step, where the upstream enclosing parts (1) is moved to an intermediate position between the closed and the open positions in order to move the pod catcher (11) from the retracted position to the receiving position.

10. Use of a pod (3, 3') for preparing a beverage in a device for extracting a beverage ingredient according to any one of Claims 1 to 5 or with a beverage machine according to Claim 6 or with a system according to Claim 7,
said pod (3, 3') comprising :
- a pod body (31), said pod body comprising :
. a side wall (311) and a bottom wall (313) defining a chamber, said chamber extending axially between the bottom and a top opening (312),
. a circumferential annular body flange (314) projecting radially outward from the top opening, said body flange comprising a top face (3141) opposite to the chamber with respect to the opening,
said pod body containing a beverage ingredient,
and
- a top lid (32) comprising a peripheral annular area (322) attached to the top face (3141) of the body flange, said top lid closing the top opening of the pod body.

11. Use according to the precedent claim wherein the body and the lid of the pod are made of paper material.

12. Use according to the precedent claim wherein the body is made of a paper material presenting a thickness of at least 100 µm.

13. Use according to Claim 11 or 12, wherein the pod body is manufactured by forcing a disc of paper material in a mould.

## Patentansprüche

1. Vorrichtung zum Extrahieren eines Getränkeinhaltsstoffs durch Zuführen einer Extraktionsflüssigkeit, wie erwärmtes Wasser, in eine Kapsel,
wobei die Kapsel (3, 3') umfasst:
- einen Kapselkörper (31), wobei der Kapselkörper umfasst:
. eine Seitenwand (311) und eine untere Wand (313), die eine Kammer definieren, wobei die Kammer sich zwischen der unteren und einer oberen Öffnung (312) axial erstreckt,
. einen umlaufenden ringförmigen Flansch (314), der von der oberen Öffnung radial nach außen vorsteht, wobei der Flansch eine obere Oberfläche umfasst, die in Bezug auf die Öffnung der Kammer gegenüberliegt, wobei der Kapselkörper einen Getränkeinhaltsstoff (33) enthält,
und
- einen oberen Deckel (32), der an der oberen Oberfläche des umlaufenden Flansches angebracht ist, wobei der obere Deckel die obere Öffnung des Kapselkörpers verschließt,
und
die Vorrichtung umfasst:
- einen festen nachgeschalteten Kapselumschließungsteil (1) und einen bewegbaren vorgeschalteten Kapselumschließungsteil (2), wobei der vorgeschaltete Kapselumschließungsteil entlang einer Längsachse (XX') zwischen einer offenen Position zum Einsetzen und/oder Auswerfen der Kapsel (3) und einer geschlossenen Position zum Ausbilden einer Extraktionskammer (5), die die Kapsel während der Extraktion umschließt, verschiebbar ist,
- wobei der vorgeschaltete Teil (2) einen Behälter (21) definiert und eine vorgeschaltete Durchstechanordnung (22) zum Öffnen der unteren Wand (313) der Kapsel und eine Flüssigkeitseinspritzeinrichtung (25) trägt,
- wobei der nachgeschaltete Teil (1) eine Platte definiert, die quer zu der Längsachse (XX') verläuft, und wobei die Platte umfasst:
. eine nachgeschaltete Ebenendurchstechanordnung (12) zum Öffnen des Deckels (32) der Kapsel,
und
. einen Randbereich (13),
und
- einen Einführabschnitt (4) zum Einführen der Kapsel in die Vorrichtung, wobei der Einführabschnitt konzipiert ist, um die Kapsel mit dem Deckel in Richtung der nachgeschalteten Durchstechanordnung (12) zu positionieren, und
- einen Kapselhalter (11), wobei der Kapselhalter an dem Randbereich (13) des nachgeschalteten Teils angebracht ist und der Kapselhalter bewegbar ist zwischen:
. einer Aufnahmeposition zum Aufnehmen und Halten des Deckels (32) der Kapsel vor der nachgeschalteten Ebenendurchstechanordnung (12), und
. eine zurückgezogene Position an den lateralen Seiten der nachgeschalteten Ebenendurchstechanordnung (12),
und
wobei der Kapselhalter (11) ein Paar Sicherungs- und Positionierungselemente (11a, 11b) umfasst, wobei jedes der Elemente eine untere Halteoberfläche (111a, 111b) und eine bogenförmige Querkante (112a, 112b) umfasst, und
wobei das Paar Sicherungs- und Positionierungselemente (11a, 11b) aus der Aufnahmeposition in die zurückgezogene Position durch den vorgeschalteten Umschließungsteil (2) schiebbar ist, wenn der vorgeschaltete Umschließungsteil in Längsrichtung aus der offenen Position in die geschlossene Position verschoben wird, und wobei die Sicherungs- und Positionierungselemente (11a, 11b) sich entlang divergierender Richtungen aus der Aufnahmeposition in die zurückgezogene Position bewegen.

2. Vorrichtung nach Anspruch 1, wobei der Kapselhalter (11) Führungsteile (113a, 113b, 114a, 114b) umfasst, die konfiguriert sind, um die Bewegungen der Sicherungs- und der Positionierungselemente zwischen der Sicherungsposition und der zurückgezogenen Position zu führen, wobei die Führungsteile Neigungen umfassen, die ausgerichtet sind, um entlang von Oberflächen des Randbereichs (13) des nachgeschalteten Umschließungsteils gemäß divergierenden Richtungen zu gleiten.

3. Vorrichtung nach dem vorstehenden Anspruch, wobei die Führungsteile für jedes der Sicherungs- und der Positionierungselemente (111a, 111b) erste Neigungen nahe der Unterseite der bogenförmigen Kanten und zweite Neigungen nahe der Oberseite der bogenförmigen Kanten umfassen.

4. Vorrichtung nach einem der vorstehenden Ansprüche, wobei das Paar Sicherungs- und Positionierungselemente aus einem einzigen Materialstück hergestellt ist.

5. Vorrichtung nach einem der vorstehenden Ansprüche, wobei der Kapselhalter (11) fähig ist, in dem Randbereich (13) des nachgeschalteten Umschließungsteils verriegelbar zu sein und verriegelt zu bleiben, bis der Betrieb des Auswurfs der Kapsel abgeschlossen ist, vorzugsweise, bis eine neue Kapsel eingeführt wird.

6. Getränkezubereitungsmaschine, umfassend eine Extraktionsvorrichtung nach einem der Ansprüche 1 bis 5.

7. System, umfassend eine Extraktionsvorrichtung nach einem der Ansprüche 1 bis 5 und eine Kapsel oder eine Getränkezubereitungsmaschine nach Anspruch 6 und eine Kapsel,
wobei die Kapsel (3, 3') umfasst:
- einen Kapselkörper (31), wobei der Kapselkörper umfasst:
. eine Seitenwand (311) und eine untere Wand (313), die eine Kammer definieren, wobei die Kammer sich zwischen der unteren und einer oberen Öffnung (312) axial erstreckt,
. einen umlaufenden ringförmigen Flansch (314), der von der oberen Öffnung radial nach außen vorsteht, wobei der Flansch eine obere Oberfläche umfasst, die in Bezug auf die Öffnung der Kammer gegenüberliegt, wobei der Kapselkörper einen Getränkeinhaltsstoff (33) enthält,
und
- einen oberen Deckel (32), der an der oberen Oberfläche des umlaufenden Flansches angebracht ist, wobei der obere Deckel die obere Öffnung des Kapselkörpers verschließt.

8. Verfahren zum Zubereiten eines Getränks mit einer Vorrichtung nach einem der Ansprüche 1 bis 5 oder einer Getränkemaschine nach Anspruch 6 oder einem System nach Anspruch 7, wobei das Verfahren die Schritte umfasst:
- Einführen einer Kapsel in den Kapselfänger (11) der Extraktionsvorrichtung, während der vorgeschaltete und der nachgeschaltete Umhüllungsteil (1, 2) sich in der offenen Position befinden und der Kapselfänger (11) sich in der Aufnahmeposition befindet,
- Bewegen des vorgeschalteten und des nachgeschalteten Umschließungsteils (1, 2) in die geschlossene Position und Bewegen des Kapselfängers (11) in die zurückgezogene Position
- Einführen von Flüssigkeit in die Kapsel durch den vorgeschalteten Umschließungsteil und Auffangen des Getränks aus dem nachgeschalten Umschließungsteil,
- Bewegen des vorgeschalteten und des nachgeschalteten Umschließungsteils (1, 2) in die offene Position.

9. Verfahren nach dem vorstehenden Anspruch, wobei der Kapselhalter (11) der Extraktionsvorrichtung fähig ist, in dem Randbereich (13) der nachgeschalteten verriegelt zu werden, und
wobei das Verfahren einen zusätzlichen Schritt zum Lösen des Kapselfängers umfasst, wobei die vorgeschalteten Umschließungsteile (1) in eine Zwischenposition zwischen der geschlossenen und der offenen Position bewegt werden, um den Kapselfänger (11) aus der zurückgezogenen Position in die Aufnahmeposition zu bewegen.

10. Verwendung einer Kapsel (3, 3') zum Zubereiten eines Getränks in einer Vorrichtung zum Extrahieren eines Getränkeinhaltsstoffs nach einem der Ansprüche 1 bis 5 oder mit einer Getränkemaschine nach Anspruch 6 oder mit einem System nach Anspruch 7,
wobei die Kapsel (3, 3') umfasst:
- einen Kapselkörper (31), wobei der Kapselkörper umfasst:
. eine Seitenwand (311) und eine untere Wand (313), die eine Kammer definieren, wobei die Kammer sich zwischen der unteren und einer oberen Öffnung (312) axial erstreckt,
. einen umlaufenden ringförmigen Körperflansch (314), der von der oberen Öffnung radial nach außen vorsteht, wobei der Körperflansch eine obere Fläche (3141) aufweist, die der Kammer in Bezug auf die Öffnung gegenüberliegt,
wobei der Kapselkörper einen Getränkeinhaltsstoff enthält,
und
- einen oberen Deckel (32), der einen ringförmigen Randbereich (322) umfasst, der an der oberen Fläche (3141) des Körperflansches angebracht ist, wobei der obere Deckel die obere Öffnung des Kapselkörpers verschließt.

11. Verwendung nach dem vorstehenden Anspruch, wobei der Körper und der Deckel der Kapsel aus Papiermaterial hergestellt sind.

12. Verwendung nach dem vorstehenden Anspruch, wobei der Körper aus einem Papiermaterial, das eine Dicke von mindestens 100 µm bietet, hergestellt ist.

13. Verwendung nach Anspruch 11 oder 12, wobei der Kapselkörper durch Einpressen einer Scheibe aus Papiermaterial in eine Form gefertigt ist.

## Revendications

1. Dispositif permettant d'extraire un ingrédient de boisson en fournissant un liquide d'extraction tel que de l'eau chauffée dans une dosette,
ladite dosette (3, 3') comprenant :
- un corps de dosette (31), ledit corps de dosette comprenant :
. une paroi latérale (311) et une paroi inférieure (313) définissant une chambre, ladite chambre s'étendant axialement entre le fond et une ouverture supérieure (312),
. une bride annulaire circonférentielle (314) faisant saillie radialement vers l'extérieur à partir de l'ouverture supérieure, ladite bride comprenant une surface supérieure opposée à la chambre par rapport à l'ouverture, ledit corps de dosette contenant un ingrédient de boisson (33),
et
- un couvercle supérieur (32) fixé à la surface supérieure de la bride circonférentielle, ledit couvercle supérieur fermant l'ouverture supérieure du corps de dosette,
et
ledit dispositif comprenant :
- une partie aval fixe d'enfermement de dosette (1) et une partie amont mobile d'enfermement de dosette (2), ladite partie amont d'enfermement de dosette pouvant effectuer une translation le long d'un axe longitudinal (XX') entre une position ouverte permettant d'insérer et/ou d'éjecter la dosette (3) et une position fermée permettant de former une chambre d'extraction (5) enfermant la dosette lors de l'extraction,
- la partie amont (2) définissant une cage (21) et portant un agencement de perçage amont (22) permettant d'ouvrir la paroi inférieure (313) de la dosette et un injecteur de liquide (25),
- la partie aval (1) définissant une plaque transversale à l'axe longitudinal (XX') et, ladite plaque comprenant :
. un agencement de perçage plan aval (12) permettant d'ouvrir le couvercle (32) de la dosette,
et
. une zone périphérique (13),
et
- une section d'insertion (4) permettant d'insérer la dosette dans le dispositif, ladite section d'insertion étant conçue pour positionner la dosette avec le couvercle faisant face à l'agencement de perçage aval (12), et
- un porte-dosette (11), ledit porte-dosette étant fixé à ladite zone périphérique (13) de la partie aval et ledit porte-dosette étant mobile entre :
. une position de réception permettant de recevoir et de maintenir le couvercle (32) de la dosette devant l'agencement de perçage plan aval (12), et
. une position rétractée au niveau des côtés latéraux de l'agencement de perçage plan aval (12),
et
ledit porte-dosette (11) comprenant une paire d'éléments de retenue et de positionnement (11a, 11b), chacun desdits éléments comprenant une surface de maintien inférieure (111a, 111b) et une arête transversale (112a, 112b) en forme d'arc, et
ladite paire d'éléments de retenue et de positionnement (11a, 11b) pouvant être poussés de la position de réception à la position rétractée par la partie d'enfermement amont (2) lorsque ladite partie d'enfermement amont est soumise à une translation longitudinalement de la position ouverte à la position fermée, et dans lequel les éléments de retenue et de positionnement (11a, 11b) se déplacent de la position de réception à la position rétractée le long de directions divergentes.

2. Dispositif selon la revendication 1, dans lequel le porte-dosette (11) comprend des parties de guidage (113a, 113b, 114a, 114b) conçues pour guider les mouvements des éléments de retenue et de positionnement entre la position de retenue et la position rétractée, lesdites parties de guidage comprenant des pentes orientées pour glisser le long de surfaces de la zone périphérique (13) de la partie d'enfermement aval selon des directions divergentes.

3. Dispositif selon la revendication précédente, dans lequel, pour chacun des éléments de retenue et de positionnement (111a, 111b), lesdites parties de guidage comprennent des premières pentes proches du bas des arêtes en forme d'arc et des secondes pentes proches du haut des arêtes en forme d'arc.

4. Dispositif selon l'une quelconque des revendications précédentes, dans lequel la paire d'éléments de retenue et de positionnement sont faits d'une seule pièce de matériau.

5. Dispositif selon l'une quelconque des revendications précédentes, dans lequel le porte-dosette (11) peut être verrouillé dans la zone périphérique (13) de la partie d'enfermement aval et rester verrouillé jusqu'à ce que l'opération d'éjection de la dosette soit terminée, de préférence jusqu'à ce qu'une nouvelle dosette soit introduite.

6. Machine de préparation de boisson comprenant un dispositif d'extraction selon l'une quelconque des revendications 1 à 5.

7. Système comprenant un dispositif d'extraction selon l'une quelconque des revendications 1 à 5 et une dosette, ou une machine de préparation de boisson selon la revendication 6 et une dosette,
dans lequel ladite dosette (3, 3') comprend :
- un corps de dosette (31), ledit corps de dosette comprenant :
. une paroi latérale (311) et une paroi inférieure (313) définissant une chambre, ladite chambre s'étendant axialement entre le fond et une ouverture supérieure (312),
. une bride annulaire circonférentielle (314) faisant saillie radialement vers l'extérieur à partir de l'ouverture supérieure, ladite bride comprenant une surface supérieure opposée à la chambre par rapport à l'ouverture, ledit corps de dosette contenant un ingrédient de boisson (33),
et
- un couvercle supérieur (32) fixé à la surface supérieure de la bride circonférentielle, ledit couvercle supérieur fermant l'ouverture supérieure du corps de dosette.

8. Procédé pour la préparation d'une boisson avec un dispositif selon l'une quelconque des revendications 1 à 5 ou une machine à boisson selon la revendication 6 ou un système selon la revendication 7, ledit procédé comprenant les étapes consistant à :
- introduire une dosette dans le porte-dosette (11) du dispositif d'extraction alors que les parties d'enfermement amont et aval (1, 2) sont dans la position ouverte et que le porte-dosette (11) est dans la position de réception,
- déplacer les parties d'enfermement amont et aval (1, 2) vers la position fermée et déplacer le porte-dosette (11) vers la position rétractée
- introduire du liquide dans la dosette par la partie d'enfermement amont et recueillir une boisson par la partie d'enfermement aval,
- déplacer les parties d'enfermement amont et aval (1, 2) vers la position ouverte.

9. Procédé selon la revendication précédente, dans lequel le porte-dosette (11) du dispositif d'extraction peut être verrouillé dans la zone périphérique (13) de l'aval, et
dans lequel le procédé comprend une étape supplémentaire de libération de porte-dosette, où les parties d'enfermement amont (1) est déplacée vers une position intermédiaire entre les positions fermée et ouverte afin de déplacer le porte-dosette (11) de la position rétractée à la position de réception.

10. Utilisation d'une dosette (3, 3') pour la préparation d'une boisson dans un dispositif permettant d'extraire un ingrédient de boisson selon l'une quelconque des revendications 1 à 5 ou avec une machine à boisson selon la revendication 6 ou avec un système selon la revendication 7,
ladite dosette (3, 3') comprenant :
- un corps de dosette (31), ledit corps de dosette comprenant :
. une paroi latérale (311) et une paroi inférieure (313) définissant une chambre, ladite chambre s'étendant axialement entre le fond et une ouverture supérieure (312),
. une bride de corps annulaire circonférentielle (314) faisant saillie radialement vers l'extérieur à partir de l'ouverture supérieure, ladite bride de corps comprenant une face supérieure (3141) opposée à la chambre par rapport à l'ouverture,
ledit corps de dosette contenant un ingrédient de boisson,
et
- un couvercle supérieur (32) comprenant une zone annulaire périphérique (322) fixée à la face supérieure (3141) de la bride de corps, ledit couvercle supérieur fermant l'ouverture supérieure du corps de dosette.

11. Utilisation selon la revendication précédente dans laquelle le corps et le couvercle de la dosette sont faits d'un matériau en papier.

12. Utilisation selon la revendication précédente dans laquelle le corps est constitué d'un matériau en papier présentant une épaisseur d'au moins 100 µm.

13. Utilisation selon la revendication 11 ou 12, dans laquelle le corps de dosette est fabriqué en forçant un disque de matériau en papier dans un moule.
